# EUROPÄISCHE PATENTSCHRIFT

(11) **EP 3 809 546 B1**
(45) Veröffentlichungstag und Bekanntmachung des Hinweises auf die Patenterteilung: **07.05.2025**
(21) Anmeldenummer: 20202087.1
(22) Anmeldetag: 15.10.2020
(51) Int. Cl.: H02G 3/08, H02G 3/12, H02G 3/06

(54) **INSTALLATIONSDOSE**
INSTALLATION BOX
BOITE D'INSTALLATION

(30) Priorität: 16.10.2019 DE 102019127970
(43) Veröffentlichungstag der Anmeldung: 21.04.2021
(73) Patentinhaber: Kaiser GmbH & Co. KG, 58579 Schalksmühle (DE); Agro AG, 5502 Hunzenschwil (CH)
(72) Erfinder: RITTER, Mathias, 58553 Halver (DE); SANZ-MARTIN, Javier, 58762 Altena (DE); SCHÜTZE, Andreas, 45659 Recklinghausen (DE); REICH, Sebastian, 58507 Lüdenscheid (DE); MEIER, Niklaus, 5742 Kölliken (CH)
(74) Vertreter: Rentsch Partner AG

(56) Entgegenhaltungen:
- EP-A1- 2 224 566
- EP-A1- 3 322 055
- EP-B1- 1 961 093
- DE-A1- 19 825 115
- DE-B3- 102006 037 700

## Beschreibung

Die Erfindung betrifft eine Installationsdose für elektrische Installationen, insbesondere von Lampen.

### HINTERGRUND DER ERFINDUNG

In Bauwerken werden für das Anbringen elektrischer Schalter, Steckdosen, Lampen, Apparate oder für Verzweigungen an den dazu vorgesehenen Stellen im Gebäude Installationsdosen verwendet, welche häufig einbetoniert werden. Unter Installationsdosen werden beispielsweise Einlasskästen, Deckendübel, Unterputzdosen, Verteilerdosen und dergleichen verstanden. Der Einbau der Installationsdose in einer Betonoberfläche (Wände, Decken, Böden) erfolgt vor dem Betonieren. Herkömmliche Installationsdosen werden beispielsweise mit Nägeln, Heisskleber oder Magneten derart an einem Schalungselement der zu giessenden Betonwand befestigt, dass eine nach vorne gerichtete Installationsöffnung der Dose der Schalung zugewandt ist und somit nach dem Vergiessen für einen Installateur zur weiteren Installation von elektrischen Geräten, wie z.B. Lampen und Schalter, etc., zugänglich ist.

EP1961093 bezieht sich auf einen Deckenkasten mit mindestens einer Leitungseinführung und einer Vorrichtungsöffnung sowie Vorrichtungshalterungen zur Befestigung einer Abdeckung oder einer Vorrichtung, wobei die innere Querschnittsfläche des Deckenkastens am oberen Teil des Deckenkastens größer ist als an der Vorrichtungsöffnung.

DE19825115 bezieht sich auf eine Dose, deren Dosenseitenwand in definierter Höhe Radialöffnungen für Rohre von elektrischen Leitungen umfasst. Diese Dose ist quer zu ihrer Längsachse geteilt und besteht aus zwei nachträglich miteinander verbindbaren Dosenteilen, von denen der eine Dosenteil an der Schalungswand befestigt wird. Um die Handhabung zu erleichtern wird vorgeschlagen, die Trennebene zwischen den beiden Dosenteilen im Höhenbereich der Radialöffnungen anzuordnen, so dass sich jede Radialöffnung in zwei Öffnungsteile gliedert. Jede der beiden Öffnungsteile ist Bestandteil je eines der beiden zusammengehörigen Dosenteile.

Aus dem Stand der Technik sind Installationsdosen bekannt, welche typischerweise ein zylinder- oder quaderförmiges Gehäuse aufweisen, und einen über die Installationsöffnung zugänglichen Installationsraum ausbilden. Die Installationsöffnung ist in der Regel während dem Vergiessen durch einen Deckel oder ähnliches verschlossen. In der Seitenwand weisen die Installationsdosen zudem oft umfangsseitig verteilt eine Mehrzahl von Rohreinführungen auf, welche zur Befestigung von Elektrorohren, insbesondere Wellrohren, und zur Durchführung von darin geführten Anschlusskabeln in den Installationsraum vorgesehen sind. Die Elektrorohre (Rohre) werden in der Regel an der Installationsdose vor dem Vergiessen von Beton und nach der Positionierung der Installationsdose an der Schalungswand angebracht.

Ein Nachteil der aus dem Stand der Technik bekannten Dosen ist die zeitaufwendige Montage der Elektrorohre vor dem Vergiessen des Betons. Durch den beschränkten Zugang in den Installationsraum von der Rückseite der Installationsdose werden die entsprechenden Rohre oftmals zu tief in die Dose gesteckt, was eine nachträgliche Kürzung der Rohre nach dem Vergiessen von der Vorderseite nötig macht.

### DARSTELLUNG DER ERFINDUNG

Eine Aufgabe der Erfindung besteht darin eine verbesserte Installationsdose bereitzustellen, welche die Montage der Elektrorohre und nachträgliche Elektroinstallation weiter vereinfacht. Insbesondere soll eine Installationsdose bereitgestellt werden, welche die Montage auf geringem Bauraum vereinfacht.

Eine Installationsdose für elektrische Installationen gemäss der Erfindung umfasst eine Abdeckung, ein röhrenförmiges Zwischenstück und einen Sockel. Der Sockel kann zur Befestigung der Installationsdose an einer Gebäudewandoberfläche dienen. Beispielsweise kann der Sockel zur Befestigung an einer Schalungswand einer zu giessenden Betonwand dienen. Die Abdeckung ist mit einem ersten Ende des Zwischenstücks wirkverbindbar. Der Sockel ist mit Vorteil mit einem zweiten Ende des röhrenförmigen Zwischenstücks wirkverbindbar. Alternativ kann das zweite Ende des Zwischenstücks ebenfalls integral mit dem Sockel verbunden sein. In dem Sockel kann eine Installationsöffnung angeordnet sein, welche einem Installateur Zugang in einen Installationsraum der Installationsdose für die Montage von elektrischen Installationen ermöglicht. Mit Vorteil ist die Installationsöffnung jedoch in einem initialen Zustand vor der Montage der elektrischen Installationen durch einen Deckel verschlossen. Das Zwischenstück und die Abdeckung können gemeinsam einen Grundkörper der Installationsdose ausbilden. Das Zwischenstück und die Abdeckung können zudem zusätzlich über eine Art Scharnier oder mindestens ein Halteband miteinander verbunden sein und/oder über dieses aneinander angeformt sein.

Die Abdeckung umfasst mindestens eine Einführöffnung zum Einführen eines Elektrorohres in den Installationsraum. In dem initialen Zustand (vor dem Einführen des Rohres) ist die Einführöffnung durch einen heraustrennbaren Wandbereich verschlossen. Die Einführöffnung schliesst zudem in einem herausgetrennten Zustand des Wandbereiches und einem wirkverbundenen Zustand der Abdeckung an dem Zwischenstück zumindest bereichsweise an das Zwischenstück an. In einem nicht wirkverbundenen Zustand der Abdeckung an dem Zwischenstück kann also ein Rohr von der Seite (quer zu einer Mittelachse des Rohres) in die Einführöffnung der Abdeckung eingeschoben werden. Dort kann es mit Hilfe des Zwischenstücks nachfolgend befestigt werden. Das Zwischenstück kann ergänzend an seinem ersten Ende eine mindestens Dichtlippe zum Fixieren und Abdichten des Rohres gegen die Abdeckung aufweisen. Diese Ausgestaltung des Grundkörpers ermöglicht eine schnelle Montage bei der das einzuführende Rohr passgenau montiert werden kann. Ein nachträgliches Ablängen des Rohres nach der Montage kann so ebenfalls vermieden werden was den Aufwand für einen Monteur weiter verringert. Die Befestigung des Rohres in der Einführöffnung kann einfach und schnell durch eine Wirkverbindung der Abdeckung mit dem röhrenförmigen Zwischenstück erfolgen. Diese Montage kann zudem (bei einer von dem Zwischenstück, respektive von dem Grundkörper, losgelösten Ausgestaltung des Sockels) vor der Wirkverbindung des Grundkörpers an dem Sockel, bzw. vor der Positionierung der montierten Installationsdose an der Schalungswand, vorgenommen werden. Dies erleichtert die Montage besonders auf kleinem Bauraum und/oder schwer zugänglichen Stellen.

Der Installationsraum wird mit Vorteil bereichsweise auch von der Abdeckung ausgebildet. Hierzu kann die Abdeckung eine Vertiefung aufweisen, welche zumindest teilweise einen Aufnahmeraum umgibt, bzw. ausformt. Die Vertiefung, respektive der Aufnahmeraum, kann über eine Montageöffnung der Abdeckung zugänglich sein. Im montierten Zustand der Installationsdose bildet die Vertiefung, respektive der Aufnahmeraum, einen Bestandteil des Installationsraumes aus. Um die Vertiefung ausbilden zu können kann die Abdeckung dünnwandig ausgestaltet sein und vom Installationsraum gesehen nach aussen auswölbend bzw. ausbauchend ausgestaltet sein, sodass die Vertiefung auf der zum Installationsraum hingewandten Seite der Abdeckung ausgebildet wird.

Mit Vorteil ist die Abdeckung pyramidenstumpfartig ausgebildet. Die Abdeckung kann einen Deckabschnitt und mehrere abgewinkelte Seitenabschnitte aufweisen, welche die pyramidenstumpfartige Abdeckung ausformen. Beispielsweise kann eine Grundfläche des Pyramidenstupfs (an dem Zwischenstück zugewandten Ende der Abdeckung) in Form eines Vielecks ausgestaltet sein. Eine der Grundfläche gegenüberliegende Deckfläche der Abdeckung kann ebenfalls die Form eines Vielecks aufweisen. Die oben beschriebene Vertiefung der Abdeckung ist mit Vorteil auf der Grundfläche angeordnet, sodass die Abdeckung dünnwandig ausgestaltet ist. Die Deckfläche ist auf einem (dünnwandigen) Deckabschnitt der pyramidenstumpfartigen Abdeckung angeordnet. Der Deckabschnitt ist mit Vorteil im Wesentlichen senkrecht zur axialen Richtung angeordnet. Der Deckabschnitt kann in einem montierten Zustand der Installationsdose an einem distalen Ende der Installationsdose angeordnet sein. Das distale Ende ist in der axialen Richtung dem Sockel gegenüberliegend angeordnet. Weiterhin kann die pyramidenstumpfartige Abdeckung mehrere zueinander winkelig angeordnete Seitenabschnitte aufweisen. Die Seitenabschnitte und der Deckabschnitt sind mit Vorteil dünnwandig und in Form eines Vielecks. Beispielsweise können einige Seitenabschnitte dreieckig und andere viereckig ausgestaltet sein. Der mindestens eine heraustrennbare Wandbereich kann zumindest bereichsweise auf einem winkelig angeordneten Seitenabschnitt angeordnet sein. Auf diese Weise ergibt sich eine (in die axiale Richtung) platzsparende Einführung des Rohres in die Abdeckung. Mit Vorteil ist pro Seitenabschnitt jedoch nur eine Einführung eines Rohres vorgesehen. Alternativ oder ergänzend kann die Abdeckung zumindest bereichsweise kuppelförmig, kegelförmig, in Form einer mehrseitigen Pyramide oder andersartig vom Installationsraum weg ausbeulend ausgebildet sein.

Die Abdeckung weist mit Vorteil einen Rand auf. Der Rand kann in die axiale Richtung röhrenförmig ausgebildet sein. Dies ist vorteilhaft, da dieser in einem montierten Zustand der Installationsdose zumindest bereichsweise in der axialen Richtung überlappend mit dem Zwischenstück angeordnet sein kann. Wenn die Abdeckung pyramidenstumpfartig ausgebildet ist, können die Seitenabschnitte an den Rand anschliessen. In einem initialen Zustand, bei dem die mindestens eine Einführöffnung durch einen heraustrennbaren Wandbereich verschlossen ist, kann der Rand um die Abdeckung umlaufend ausgestaltet sein. Der heraustrennbare Wandbereich erstreckt sich in diesem Fall über den Rand bis an die Montageöffnung heran. In dem herausgetrennten Zustand des mindestens einen Wandbereiches ist der Rand somit über den Umfang der Abdeckung (in Bezug auf eine sich in die axiale Richtung erstreckende Mittelachse der Installationsdose) unterbrochen. Die mindestens eine Einführöffnung grenzt dann bis an die Montageöffnung heran.

An der Innenseite der Abdeckung (zum Installationsraum hingewandt) kann je nach Anwendung eine Befestigungsaufnahme für die Befestigung elektrischer Installationen angeordnet sein. Mit Vorteil ist die Befestigungsaufnahme am distalen Ende der Abdeckung, wie beispielsweise dem Deckabschnitt, angeordnet. Die Befestigungsaufnahme kann als eine Vertiefung, Öse, oder ähnliches ausgestaltet sein. Die Befestigungsaufnahme kann beispielsweise ein Sackloch sein, in welches eine Aufhängung eingeschraubt werden kann. Weiterhin kann die Befestigungsaufnahme einen Einsatz, insbesondere einen metallischen Einsatz, umfassen. Mit Vorteil umfasst der Einsatz ein Gewinde zur Aufnahme der Aufhängung. Der Einsatz kann eingespritzt oder eingepresst werden. Beispielsweise kann der Einsatz eine Einpressbuchse oder Einpressmutter sein. Ja nach Ausgestaltung kann sich die Befestigungsaufnahme durch den Deckabschnitt erstrecken.

Das röhrenförmige Zwischenstück kann in der axialen Richtung mindestens eine Stufe aufweisen. Die Stufe kann zwischen dem ersten Ende und dem zweiten Ende angeordnet sein. Die Stufe ermöglicht unterschiedliche Ausgestaltungen des ersten und des zweiten Endes. Beispielsweise kann das röhrenförmige Zwischenstück an dem zweiten Ende einen im Wesentlichen runden Querschnitt und an dem ersten Ende einen eckigen Querschnitt aufweisen. Der im Wesentlichen runde Querschnitt kann dem Querschnitt der Installationsöffnung entsprechen. Mit Vorteil nimmt eine Querschnittsfläche des röhrenförmigen Zwischenstücks über die Stufe und von dem zweiten Ende zu dem ersten Ende in die axiale Richtung zu.

Das röhrenförmige Zwischenstück ist mit Vorteil an dem ersten Ende mit der Abdeckung wirkverbindbar ausgestaltet. Beispielsweise kann die Abdeckung auf das erste Ende des röhrenförmigen Zwischenstücks aufsteckbar und/oder einrastbar ausgestaltet sein. Jedoch sind auch andere Ausgestaltungen möglich. Das dem ersten Ende gegenüberliegende zweite Ende des Zwischenstücks kann, wie oben beschrieben, entweder mit dem Sockel integral verbunden sein oder über das zweite Ende wirkverbindbar mit dem Sockel ausgestaltet sein. Eine nicht integrale Ausgestaltung bringt den oben beschriebenen Vorteil der einfachen und vom Sockel losgelösten Montage der Rohre. Um den Sockel und das Zwischenstück miteinander zu verbinden können weiter (erste) Wirkverbindungsmittel angeordnet am Sockel und/oder am Zwischenstücks vorhanden sein. Weiter können (zweite) Wirkverbindungsmittel vorhanden sein um das Zwischenstück mit der Abdeckung zu verbinden. Die zweiten Wirkverbindungsmittel können an der Abdeckung und/oder am Zwischenstücks angeordnet sein. Mit Vorteil sind die zweiten Wirkverbindungsmittel zumindest teilweise an dem Rand der Abdeckung, wenn vorhanden, angeordnet. Die zweiten Wirkverbindungsmittel sorgen zudem für eine Fixierung des zwischen dem Zwischenstück und der Abdeckung angeordneten eingeführten Rohres in den Installationsraum. Mit Vorteil sind die ersten und/oder die zweiten Wirkverbindungsmittel Rastelemente.

Je nach Ausgestaltung der Installationsdose kann das Zwischenstück eine im Vergleich zu dem Sockel oder der Abdeckung nur geringe Erstreckung in die axiale Richtung aufweisen. In einem montierten Zustand der Installationsdose erstreckt sich der Sockel und die Abdeckung mit Vorzug gemeinsam über 80%, insbesondere über 90% der Installationsdose in die axiale Richtung. Dies ermöglicht eine geringe Bauhöhe der Dose und eine platzsparende Montage. Mit Vorteil ist in einem montierten Zustand der Installationsdose das erste Ende des Zwischenstücks innerhalb der Abdeckung angeordnet und das zweite Ende des Zwischenstücks innerhalb des Sockels angeordnet.

Der heraustrennbare Wandbereich der Abdeckung kann entlang mindestens einer definierten Kontur herausgetrennt werden. In einem herausgetrennten Zustand des mindestens einen Wandbereiches wird so die entlang der Kontur verlaufende Einführöffnung zum Einführen eines Elektrorohres in den Installationsraum gebildet. Mit Vorteil ist entlang dieser Kontur mindestens ein Sollbruchelement angeordnet. Das mindestens eine Sollbruchelement kann beispielsweise durch eine Dünnstelle der Abdeckung gebildet werden. Auch kann zumindest bereichsweise ein anderes Material verwendet werden um eine Sollbruchstelle zu erzeugen. Bei der Herstellung der Installationsdose durch Spritzguss kann hierzu beispielsweise ein Zwei-Komponentenverfahren verwendet werden.

Die Einführöffnung wird in eine erste Zone zur Aufnahme eines Rohres und eine zweite Zone zum seitlichen Einschieben des Elektrorohres in die erste Zone aufgeteilt.

Eine Kontur der ersten Zone ist mit Vorteil derart ausgestaltet, dass diese dem äusseren Umfang des einzuführenden Rohres folgt, d.h. die Kontur der ersten Zone ist vorzugsweise rund. Die Kante der Einführöffnung der ersten Zone kann beispielsweise in ein Wellental eines gewellten Rohres eingreifen und an diesem dichtend anliegen. Gleichzeitig ist dieses Rohr so beispielsweise senkrecht zum lokalen Abschnitt der Abdeckung fixiert und kann bei der Montage nicht mehr aus der Einführöffnung herausrutschen.

Um das Elektrorohr in der Einführöffnung bzw. in der ersten Zone weiter zu fixieren, weist die Kontur, respektive die Einführöffnung nach dem Heraustrennen des Wandbereiches mindestens einen Hinterschnitt auf, sodass ein in die erste Zone der Einführöffnung eingeschobenes Rohr hinter dem Hinterschnitt verrastet. Für eine gute Positionierung des Rohres ist der mindestens eine Hinterschnitt mit Vorteil zwischen der ersten und der zweiten Zone angeordnet. In einer Variante kann an beiden Seiten der Einführöffnung ein Hinterschnitt angeordnet sein, so dass eine Omega-förmige Einführöffnung entsteht. Die Omega-förmige Einführöffnung kann derart ausgestaltet sein, dass die zweite Zone der Einführöffnung über 130 °- 170° (grad) an eine kreisförmige Kontur der ersten Zone angrenzt. Um das Heraustrennen des Wandbereiches zu erleichtern, kann dieser zumindest bereichsweise von mindestens einem Versteifungselement umgeben sein. Wenn die mindestens eine Einführöffnung in einem Seitenabschnitt, wie oben beschrieben, angeordnet ist, kann in einer Ebene des Seitenabschnitts mindestens einen Hinterschnitt ausgebildet sein, sodass ein dort eingeschobenes Rohr hinter dem Hinterschnitt verrastet.

Um verschiedene Rohre mit unterschiedlichen Durchmessern in die Installationsdose bzw. in die Einführöffnung einführen zu können, kann die Abdeckung mehrere, zumindest teilweise umeinander herum angeordnete Konturen aufweisen. Beispielsweise kann der heraustrennbare Wandbereich in einen inneren heraustrennbaren Wandbereich und mindestens einen äusseren heraustrennbaren Wandbereich unterteilt werden. Beim Heraustrennen des inneren Wandbereiches entlang einer ersten Kontur wird eine Einführöffnung für kleinere Rohrdurchmesser gebildet, während beim Heraustrennen des inneren und des äusseren Wandbereiches entlang einer zweiten Kontur eine grössere Einführöffnung zum Einführen für grössere Rohre gebildet wird. Der äussere Wandbereich grenzt mit Vorteil zumindest bereichsweise an den innenliegenden Wandbereich an. Der Bereich zwischen zwei direkt aneinander angrenzenden Wandbereiche ist vorteilhafterweise durch ein Versteifungselement gesondert verstärkt, so dass das ungewollte Ausbrechen eines benachbarten Wandbereiches möglichst vermieden wird.

Für eine verbesserte Fixierung eines in die Einführöffnung eingeführten Rohres, kann alternativ oder in Ergänzung zumindest bereichsweise um die Einführöffnung herum ein Fixierungskragen angeordnet sein. Der Fixierungskragen steht hierbei mit Vorteil im Wesentlichen senkrecht von dem entsprechenden Abschnitt der Abdeckung ab. Der Fixierungskragen greift in einem montierten Zustand in ein (Wellen-)Tal eines montierten wellenförmigen Rohres ein. Der breitere Fixierungskragen verhindert ein Verrutschen des Rohres an der schmaler ausgestalteten Abtrennkante des heraustrennbaren Wandbereiches und ermöglicht somit eine bessere Positionierung des Rohres.

Das Scharnier zur Befestigung der Abdeckung an dem Zwischenstück ist mit Vorteil zweiteilig ausgestaltet, mit einem ersten Teil angeordnet links von einer Einführöffnung und einem zweiten Teil angeordnet rechts von derselben Einführöffnung. Alternativ können zwei Haltebänder vorhanden sein. Mit Vorteil sind die Haltebänder in Umfangsrichtung links und rechts neben einer Einführöffnung angeordnet. Die Haltebänder sind mit Vorteil derart ausgestaltet, respektive lang genug ausgestaltet, dass ein Rohr zwischen den Haltebändern in der dazwischenliegenden Einführöffnung montiert werden kann.

Der Sockel weist mit Vorteil einen um die Installationsöffnung, bzw. um den Deckel des Sockels, umlaufenden Rand oder Wulst auf, welcher das Fliessen von Beton in die Installationsöffnung, bzw. auf den Deckel, verhindert, wenn die Installationsdose an einer Schalungswand anliegt. Der Deckel ist mit Vorteil über eine umlaufende Dünnstelle an dem Sockel angeformt, sodass dieser für die Montage und nach dem Einbau der Rohre und der Installationsdose in der Betonwand herausgetrennt werden kann. Radial weiter aussenliegende Bereiche (in Bezug auf eine Mittelachse der Installationsöffnung, respektive neben dem Deckel) sind mit Vorteil in die axiale Richtung weiter nach hinten in Richtung der Abdeckung versetzt angeordnet. Auf diese Weise ist die Installationsdose in der Betonoberfläche nur minimal sichtbar. Gegebenenfalls kann der Sockel auf einer von der Abdeckung abgewandten Seite (und somit im montierten Zustand in der Betonwand auf einer der Schalungswand zugewandten Seite) weitere Abstützelemente aufweisen, welche jedoch nur punktuell an der Schalungswand anliegen und die Installationsdose an dieser besser positionieren bzw. zu dieser besser ausrichten. Weiterhin kann der Sockel im Bereich des Deckels ein Anzeigemittel, wie zum Beispiel einen oder mehrere Dorne aufweisen, um einen Monteur das finden einer einbetonierten Installationsdose in der Betonwand zu vereinfachen.

Mit Vorteil weist der Sockel Befestigungsmittel zum Befestigen der Installationsdose an einer Schalungswand auf. Die Befestigungsmittel können beispielsweise Aufnahmestellen für Nägel und/oder Schrauben sein. Alternativ kann das Befestigungsmittel durch einen Magneten angeordnet im Sockel gebildet werden, welche die Installationsdose an einer metallischen Schalungswand positioniert. Ebenfalls möglich ist jedoch die Positionierung über einen Klebefilm, Klebeschicht oder ähnliches. Je nach Ausgestaltung der Installationsdose können die Befestigungsmittel auf dem Deckel des Sockels, welcher die Installationsöffnung verschliessen kann, angeordnet sein.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante einer erfindungsgemässen Installationsdose in einem montierten Zustand in einer perspektivischen Ansicht;
- Fig. 2: Die Installationsdose gemäss Figur 1 in einer geschnittenen Ansicht von der Seite;
- Fig. 3: Die Installationsdose gemäss Figur 1 in einem nicht montierten Zustand mit herausgetrennten Wandbereich und mit einem Deckel.

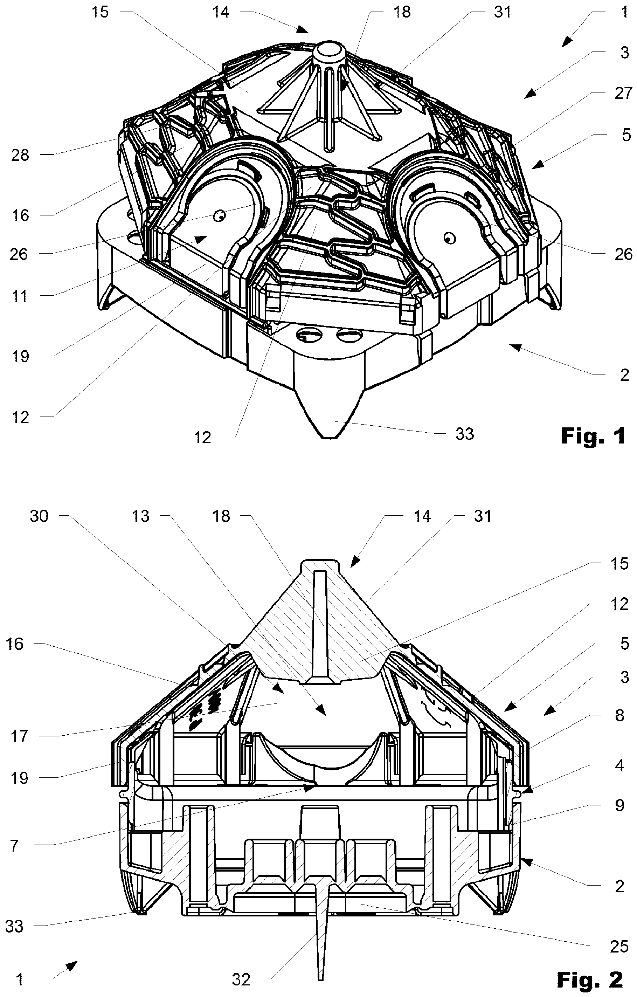

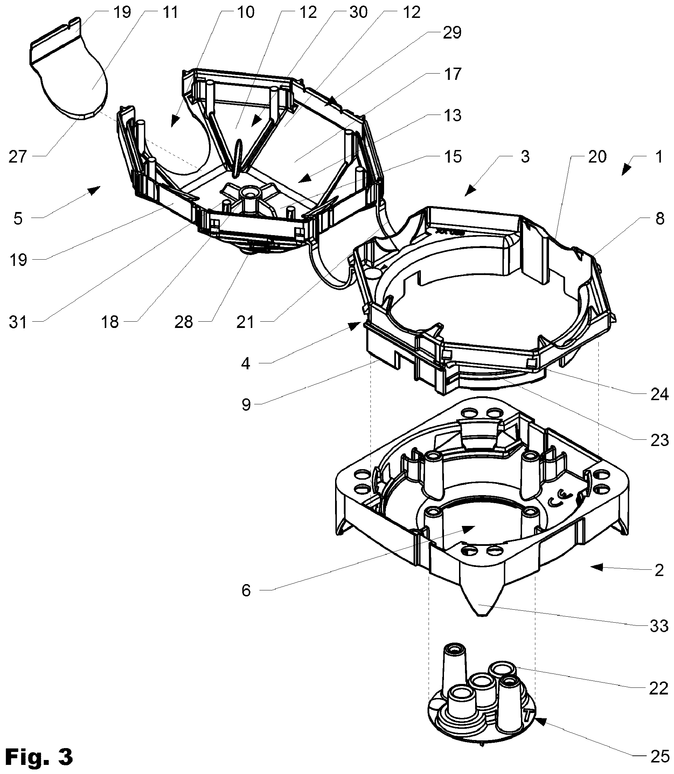

**Figur 1** bis **Figur 3** zeigen eine erste Variante einer erfindungsgemässen Installationsdose 1. **Figur 1** und **Figur 2** zeigen hierbei einen montierten Zustand, während **Figur 3** einen nicht montierten Zustand zeigt.

Die erfindungsgemässe Installationsdose 1 umfasst einen Grundkörper 3 mit einem röhrenförmigen Zwischenstück 4 und einer Abdeckung 5, welche miteinander wirkverbindbar sind. Die Installationsdose 1 umfasst weiter einen Sockel 2 zur Auflage der Installationsdose an einer Schalungswand (nicht gezeigt) und weist mit Vorteil Befestigungsmittel 22 zum Befestigung der Installationsdose 1 an der Schalungswand auf. Die Abdeckung 5 ist an einem ersten Ende 8 des Zwischenstücks 4 befestigbar. Der Sockel 2 ist mit einem zweiten Ende 9 des röhrenförmigen Zwischenstücks 4 wirkverbindbar. Das röhrenförmige Zwischenstück 4 ist zudem über zwei Haltebänder 21 an der Abdeckung 5 angebracht und/oder angeformt.

In **Figur 2** ist ersichtlich, dass sich der Sockel 2 und die Abdeckung 5 in einem montierten Zustand der Installationsdose 1 über 80% insbesondere über 90%, der Installationsdose 1 in die axiale Richtung erstrecken. Das erste und das zweite Ende 8, 9 des Zwischenstücks 4 sind hierbei jeweils in der Abdeckung 5, bzw. in dem Sockel 2, angeordnet, sodass das Zwischenstück 4 fast vollständig in der Abdeckung 5 und in dem Sockel 2 angeordnet ist. Für die Wirkverbindung der Abdeckung 5 mit dem Zwischenstück 4, weist die Abdeckung 5 einen Rand 19 auf, welcher in einem montierten Zustand der Installationsdose 1 auf das erste Ende 8 des Zwischenstücks 4 gesteckt werden kann. In dem gezeigten Schnitt ist ebenfalls ersichtlich, dass die Abdeckung 5 eine Vertiefung 13 mit einem Aufnahmeraum 30 ausbildet, welcher im montierten Zustand einen wesentlichen Teil des Installationsraumes 7 ausmacht. Dies wird durch die ausgewölbte Form der Abdeckung 5 ermöglicht. Der Aufnahmeraum 30 ist über eine Montageöffnung 29 der Abdeckung 5 zugänglich. Die Abdeckung 5 ist hierbei im Wesentlichen in Form eines Pyramidenstumpfs ausgebildet mit mehreren winkelig zueinander angeordneten Seitenabschnitten 12 und einem Deckabschnitt 15 an einem distalen Ende 14. An der Innenseite 17 des Deckabschnitts 15 ist eine Befestigungsaufnahme 18 zur Aufnahme von beispielsweise einen Haken oder ähnliches zur Befestigung von elektrischen Installationen vorgesehen. Die Befestigungsaufnahme 18 ist vom Aufnahmeraum 30, respektive vom Installationsraum 7, zugänglich. Im gezeigten Fall ist die Befestigungsaufnahme ein Sackloch 18, welches sich durch den Deckabschnitt erstreckt. Jedoch kann die Befestigungsaufnahme auch als eine andersartige Vertiefung, Öse, oder ähnliches ausgestaltet sein. Für eine materialsparende Ausführung kann die Befestigungsaufnahme 18 an der Innenseite 17 und/oder der Aussenseite 16 der Abdeckung 5 Rippen 31 zur Verstärkung aufweisen. Im gezeigten Fall sind an dem Deckabschnitt 15 an der Innenseite 17 und der Aussenseite 16 jeweils multiple Rippen 31 angeordnet (siehe **Figur 1** und **Figur 3**). In **Figur 1** ist zudem ersichtlich, dass die Abdeckung 5 ergänzende Versteifungselemente 28 entlang der Aussenseite 16 aufweisen kann.

In der Abdeckung 5 sind mehrere heraustrennbarer Wandbereiche 11 angeordnet. **Figur** 3 illustriert den heraustrennten Zustand eines Wandbereiches 11. In dem herausgetrennten Zustand des Wandbereiches 11 gibt dieser eine Einführöffnung 10 zum Einführen eines Rohres in den Aufnahmeraum 30 frei. Die Einführöffnung 10, respektive der mindestens eine heraustrennbare Wandbereich 11 grenzt an die Montageöffnung 29 an und erstreckt sich über den Rand 19 der Abdeckung 5. In einem herausgetrennten Zustand des Wandbereiches 11 und einem montierten Zustand der Abdeckung 5 an dem Zwischenstück 4, schliesst die Einführöffnung 10 zumindest bereichsweise an das Zwischenstück 4 an. Somit wird das Rohr im montierten Zustand zwischen der Abdeckung 5 und dem Zwischenstück 4 eingeklemmt und fixiert. Für die Wirkverbindung des Zwischenstücks 4 mit dem Sockel 2 sind erste Wirkverbindungsmittel 23 vorhanden. Für die Wirkverbindung des Zwischenstücks 4 mit der Abdeckung 5 und zur Fixierung des Rohres sind zweite Wirkverbindungsmittel 24 vorhanden. Das Zwischenstück 4 weist zudem an seinem ersten Ende 8 eine Dichtlippe 20 zum Abdichten des Rohres gegen die Abdeckung 5 auf. Der heraustrennbare Wandbereich 11 kann entlang mindestens eine definierten Kontur 26, 27 herausgetrennt werden. Zum Heraustrennendes kann entlang einer Kontur 26, 27 mindestens ein Sollbruchelement angeordnet sein. In **Figur 3** ist der herausgetrennte Wandbereich 11 ersichtlich, welcher entlang einer Kontur 27 herausgetrennt wurde. Der Wandbereich 11 hat hierbei im Wesentlichen eine Omega-Form, welche an beiden Seiten der Einführöffnung 10 ein Hinterschnitt ausbildet, hinter welchem das Rohr verrasten kann. Um verschiedene Rohre mit unterschiedlichen Durchmessern in die Installationsdose 1 bzw. in die Einführöffnung 10 einführen zu können, kann die Abdeckung 5 mehrere, zumindest teilweise umeinander herum angeordnete Konturen 26, 27 aufweisen. Somit wird ein innerer und ein den inneren teilweise umgebender äusserer heraustrennbarer Wandbereich 11 gebildet. Beim Heraustrennen des inneren Wandbereiches 11 entlang der ersten Kontur 26 wird eine Einführöffnung 10 für kleinere Rohrdurchmesser gebildet, während beim Heraustrennen des inneren und des äusseren Wandbereiches entlang der zweiten Kontur 27 eine grössere Einführöffnung 10 zum Einführen für grössere Rohre gebildet wird.

Wie ebenfalls in **Figur 3** ersichtlich weist der Sockel 2 eine Installationsöffnung 6 auf. Diese ist in dem initialen Zustand von einem Deckel 25 verschlossen. Im gezeigten Fall sind auf diesem Befestigungsmittel 22 in Form von Sacklöchern für das Befestigen mittels Nägeln, angeordnet, welche zur Befestigung der Installationsdose 1 an einer (nicht gezeigten) Schalungswand dienen. Andere Befestigungsarten sind jedoch ebenfalls denkbar. Weiterhin weist die Abdeckung 5 radial weiter aussenliegende Bereiche (in Bezug auf eine Mittelachse der Installationsöffnung, respektive den Deckel 25) auf, welche in die axiale Richtung weiter nach hinten in Richtung der Abdeckung 5 versetzt angeordnet sind. Auf diese Weise ist die verbaute Installationsdose 1 an einer Betonoberfläche nur minimal sichtbar. Für eine stabile Positionierung der Installationsdose an der Schalungswand weist der Sockel 2 auf einer von der Abdeckung 5 abgewandten Seite (und somit im montierten Zustand in der Wand auf einer der Schalungswand zugewandten Seite) vier Abstützelemente 33 auf, welche jedoch nur punktuell an der Schalungswand anliegen. Wie in **Figur 2** ersichtlich, ist auf dem Deckel 25 zudem ein Anzeigemittel 32 vorhanden, welches einem Monteur die Position der Installationsdose 1 in einer verputzten Betonoberfläche einfacher anzeigen kann.

**LISTE DER BEZUGSZEICHEN**

| | | | |
|---|---|---|---|
| 1 | Installationsdose | 18 | Befestigungsaufnahme |
| 2 | Sockel | 19 | Rand |
| 3 | Grundkörper | 20 | Dichtlippe |
| 4 | Seitenwand | 21 | Halteband |
| 5 | Abdeckung | 22 | Befestigungsmittel |
| 6 | Installationsöffnung | 23 | erste Wirkverbindungsmittel |
| 7 | Installationsraum | 24 | Zweite Wirkverbindungsmittel |
| 8 | Erstes Ende | 25 | Deckel |
| 9 | Zweites Ende | 26 | Erste Kontur |
| 10 | Einführöffnung | 27 | Zweite Kontur |
| 11 | Wandbereich | 28 | Versteifungselement |
| 12 | Seitenabschnitt | 29 | Montageöffnung |
| 13 | Vertiefung | 30 | Aufnahmeraum |
| 14 | Distales Ende | 31 | Rippe |
| 15 | Deckabschnitt | 32 | Anzeigemittel |
| 16 | Aussenseite | 33 | Abstützelement |
| 17 | Innenseite | | |

## Patentansprüche

1. Installationsdose (1) für elektrische Installationen umfassend
a. einen Sockel (2) zur Befestigung der Installationsdose (1) an einer Schalungswand mit einer in dem Sockel (2) angeordneten Installationsöffnung (6),
b. ein röhrenförmiges Zwischenstück (4) und einer mit einem ersten Ende (8) des röhrenförmigen Zwischenstücks (4) wirkverbindbaren Abdeckung (5), wobei
c. in der Abdeckung (5) mindestens eine Einführöffnung (10) zum Einführen eines Elektrorohres in einen Installationsraum (7) der Installationsdose (1) angeordnet ist, und
d. die mindestens eine Einführöffnung (10) in einem initialen Zustand durch einen heraustrennbaren Wandbereich (11) verschlossen ist, und in einem herausgetrennten Zustand des Wandbereiches (11) und einem wirkverbundenen Zustand der Abdeckung (5) an dem Zwischenstück (4) zumindest bereichsweise an das Zwischenstück (4) anschliesst,
e. **dadurch gekennzeichnet, dass** die Einführöffnung (10) nach dem Heraustrennen des Wandbereiches (11) mindestens einen Hinterschnitt aufweist um ein Elektrorohr in der Einführöffnung (10) zu fixieren, wobei der Hinterschnitt die Einführöffnung in eine erste Zone zur Aufnahme eines Rohres und eine zweite Zone zum seitlichen Einschieben des Elektrorohres in die erste Zone aufteilt, sodass ein in die erste Zone der Einführöffnung (10) eingeschobenes Rohr hinter dem Hinterschnitt verrastet.

2. Installationsdose (1) gemäss Patentanspruch 1, **dadurch gekennzeichnet, dass** die Abdeckung (5) eine Vertiefung (13) aufweist, welche im montierten Zustand einen Bestandteil des Installationsraumes (7) ausformt.

3. Installationsdose (1) gemäss einem der vorangehenden Patentansprüche, **dadurch gekennzeichnet, dass** die Abdeckung (5) pyramidenstumpfartig ausgebildet ist.

4. Installationsdose (1) gemäss Patentanspruch 3, **dadurch gekennzeichnet, dass** die pyramidenstumpfartige Abdeckung (5) einen Deckabschnitt (15) und mehrere abgewinkelte Seitenabschnitte (12) aufweist.

5. Installationsdose (1) gemäss Patentanspruch 4, **dadurch gekennzeichnet, dass** die mindestens eine Einführöffnung (10) in einem Seitenabschnitt (12) angeordnet ist**.**

6. Installationsdose (1) gemäss Patentanspruch 4 oder 5, **dadurch gekennzeichnet, dass** an einer Innenseite (17) des Deckabschnittes (15) eine Befestigungsaufnahme (18) für die Befestigung elektrischer Installationen angeordnet ist.

7. Installationsdose (1) gemäss einem der vorangehenden Patentansprüche, **dadurch gekennzeichnet, dass** das Zwischenstück (4) an seinem ersten Ende (8) eine Dichtlippe (20) zum Abdichten des Rohres gegen die Abdeckung (5) aufweist.

8. Installationsdose (1) gemäss einem der vorangehenden Patentansprüche, **dadurch gekennzeichnet, dass** die Abdeckung (5) über ein Scharnier oder mindestens ein Halteband (21) am Zwischenstück (4) angeformt ist.

9. Installationsdose (1) gemäss einem der vorangehenden Patentansprüche, **dadurch gekennzeichnet, dass** die Installationsöffnung (6) in einem initialen Zustand durch einen Deckel (25) verschlossen ist.

10. Installationsdose (1) gemäss einem der vorangehenden Patentansprüche, **dadurch gekennzeichnet, dass** sich der Sockel (2) und die Abdeckung (5) in einem montierten Zustand der Installationsdose (1) über 80%, insbesondere über 90%, der Installationsdose (1) in die axiale Richtung erstrecken.

11. Installationsdose (1) gemäss einem der vorangehenden Patentansprüche, **dadurch gekennzeichnet, dass** das röhrenförmige Zwischenstück (4) mit einem dem ersten Ende (8) gegenüberliegenden zweiten Ende (9) an den Sockel (2) wirkverbindbar ist.

12. Installationsdose (1) gemäss Patentanspruch 11, **dadurch gekennzeichnet, dass** in einem montierten Zustand der Installationsdose (1) das erste Ende (8) des Zwischenstücks (4) innerhalb der Abdeckung (5) angeordnet ist und das zweite Ende (9) des Zwischenstücks (4) innerhalb des Sockels (2) angeordnet ist.

13. Installationsdose (1) gemäss einem der vorangehenden Patentansprüche 11 oder 12, **dadurch gekennzeichnet, dass** das röhrenförmige Zwischenstück (4) in der axialen Richtung mindestens eine Stufe aufweist, welche zwischen dem ersten Ende (8) und dem zweiten Ende (9) angeordnet ist.

14. Installationsdose (1) gemäss einem der vorangehenden Patentansprüche 11 bis 13, **dadurch gekennzeichnet, dass** das röhrenförmige Zwischenstück (4) an dem ersten Ende (8) einen Querschnitt in Form eines Vielecks und an dem zweiten Ende (9) einen im Wesentlichen runden Querschnitt aufweist.

15. Installationsdose (1) gemäss Patentanspruch 13 oder 14, **dadurch gekennzeichnet, dass** das röhrenförmige Zwischenstück (4) über die Stufe und von dem zweiten Ende (9) zu dem ersten Ende (8) an Querschnittsfläche zunimmt.

16. Installationsdose (1) gemäss einem der vorangehenden Patentansprüche 1 bis 10, **dadurch gekennzeichnet, dass** das röhrenförmige Zwischenstück (4) und der Sockel (2) integral miteinander verbunden sind.

## Claims

1. Installation box (1) for electrical installations, comprising
a. a base (2) for fastening the installation box (1) to a formwork wall, with an installation opening (6) arranged in the base (2),
b. a tube-shaped intermediate part (4) and a cover (5) interconnected with a first end (8) of the tube-shaped intermediate part (4), wherein
c. at least one insertion opening (10) for inserting an electrical tube into an installation space (7) of the installation box (1) is arranged in the cover (5), and
d. the at least one insertion opening (10) is closed in an initial state by a detachable wall area (11), and in a detached state of the wall area (11) and an interconnected state of the cover (5) to the intermediate part (4) adjoins at least in some areas the intermediate part (4),
e. **characterized in that** the insertion opening (10) has at least one undercut after detaching the wall area (11), in order to fix an electrical tube in the insertion opening (10), wherein the undercut divides the insertion opening into a first zone for receiving a tube and a second zone for laterally inserting the electrical tube into the first zone, such that a tube inserted into the first zone of the insertion opening (10) latches behind the undercut.

2. Installation box (1) according to patent claim 1, **characterized in that** the cover (5) has a depression (13) which, in the installed state, forms part of the installation space (7).

3. Installation box (1) according to one of the preceding patent claims, **characterized in that** the cover (5) is designed in the shape of a truncated pyramid.

4. Installation box (1) according to patent claim 3, **characterized in that** the cover (5) in the shape of a truncated pyramid has a cover section (15) and a plurality of angled side sections (12).

5. Installation box (1) according to patent claim 4, **characterized in that** the at least one insertion opening (10) is arranged in a side section (12).

6. Installation box (1) according to patent claim 4 or 5, **characterized in that** a fastening receiver (18) for the fastening of electrical installations is arranged on an inner side (17) of the cover section (15).

7. Installation box (1) according to one of the preceding patent claims, **characterized in that** the intermediate part (4) has a sealing lip (20) at its first end (8) for sealing the tube against the cover (5).

8. Installation box (1) according to one of the preceding patent claims, **characterized in that** the cover (5) is formed on the intermediate part (4) by means of a hinge or at least one retaining band (21).

9. Installation box (1) according to one of the preceding patent claims, **characterized in that** the installation opening (6) is closed in an initial state by a cap (25).

10. Installation box (1) according to one of the preceding patent claims, **characterized in that** the base (2) and the cover (5) extend in an assembled state of the installation box (1) over 80%, in particular over 90%, of the installation box (1) in the axial direction.

11. Installation box (1) according to one of the preceding patent claims, **characterized in that** the tube-shaped intermediate part (4) can be interconnected to the base (2) with a second end (9) opposite the first end (8).

12. Installation box (1) according to patent claim 11, **characterized in that,** in an assembled state of the installation box (1), the first end (8) of the intermediate part (4) is arranged inside the cover (5) and the second end (9) of the intermediate part (4) is arranged inside the base (2).

13. Installation box (1) according to one of the preceding patent claims 11 or 12, **characterized in that** the tube-shaped intermediate part (4) has at least one stage in the axial direction, which is arranged between the first end (8) and the second end (9).

14. Installation box (1) according to one of the preceding patent claims 11 to 13, **characterized in that** the tube-shaped intermediate part (4) has a cross-section in the form of a polygon at the first end (8) and a substantially round cross-section at the second end (9).

15. Installation box (1) according to patent claim 13 or 14, **characterized in that** the tube-shaped intermediate part (4) increases in cross-sectional area over the stage and from the second end (9) to the first end (8).

16. Installation box (1) according to one of the preceding patent claims 1 to 10, **characterized in that** the tube-shaped intermediate part (4) and the base (2) are integrally connected to one another.

## Revendications

1. Boîte d'installation (1) pour installations électriques comprenant
a. un socle (2) pour la fixation de la boîte d'installation (1) sur une paroi de coffrage avec une ouverture de montage (6) arrangée dans le socle (2),
b. une pièce intermédiaire tubulaire (4) et une couverture (5) interconnectable avec une première extrémité (8) de la pièce intermédiaire tubulaire (4), dans laquelle
c. au moins une ouverture d'introduction (10) est arrangée dans la couverture (5) pour introduire un tube électrique dans un espace d'installation (7) de la boîte d'installation (1), et
d. l'au moins une ouverture d'introduction (10) est fermée dans un état initial par une zone de paroi (11) détachable, et se raccorde au moins par zones à la pièce intermédiaire (4) dans un état détachable de la zone de paroi (11) et dans un état interconnecté de la couverture (5) sur la pièce intermédiaire (4),
e. **caractérisé en ce que** l'ouverture d'introduction (10) présente, après le détachement de la zone de paroi (11), au moins une contre-dépouille pour fixer un tube électrique dans l'ouverture d'introduction (10), la contre-dépouille divisant l'ouverture d'introduction en une première zone pour recevoir un tube et une deuxième zone pour l'insertion latérale du tube électrique dans la première zone, de sorte qu'un tube inséré dans la première zone de l'ouverture d'introduction (10) s'enclenche derrière la contre-dépouille.

2. Boîte d'installation (1) selon la revendication 1, **caractérisée en ce que** la couverture (5) présente un renfoncement (13) qui, à l'état monté, forme un composant de l'espace d'installation (7).

3. Boîte d'installation (1) selon l'une des revendications précédentes, **caractérisée en ce que** la couverture (5) est réalisée en forme de pyramide tronquée.

4. Boîte d'installation (1) selon la revendication 3, **caractérisée en ce que** la couverture (5) en forme de pyramide tronquée présente une section de couverture (15) et plusieurs sections latérales (12) coudées.

5. Boîte d'installation (1) selon la revendication 4, **caractérisée en ce que** la au moins une ouverture d'introduction (10) est arrangée dans une section latérale (12).

6. Boîte d'installation (1) selon la revendication 4 ou 5, **caractérisée en ce qu'** un logement de fixation (18) pour la fixation d'installations électriques est arrangé sur un côté intérieur (17) de la section de couverture (15).

7. Boîte d'installation (1) selon l'une des revendications précédentes, **caractérisée en ce que** la pièce intermédiaire (4) présente à sa première extrémité (8) une lèvre d'étanchéité (20) pour assurer l'étanchéité du tube contre la couverture (5).

8. Boîte d'installation (1) selon l'une des revendications précédentes, **caractérisée en ce que** la couverture (5) est formée sur la pièce intermédiaire (4) par une charnière ou au moins une bande de retenue (21).

9. Boîte d'installation (1) selon l'une des revendications précédentes, **caractérisée en ce que** l'ouverture de montage (6) est fermée dans un état initial par un couvercle (25).

10. Boîte d'installation (1) selon l'une des revendications précédentes, **caractérisée en ce que** le socle (2) et la couverture (5) s'étendent, dans un état monté de la boîte d'installation (1), sur plus de 80%, en particulier sur plus de 90%, de la boîte d'installation (1) dans la direction axiale.

11. Boîte d'installation (1) selon l'une des revendications précédentes, **caractérisée en ce que** la pièce intermédiaire tubulaire (4) est interconnectable au socle (2) par une deuxième extrémité (9) opposée à la première extrémité (8).

12. Boîte d'installation (1) selon la revendication 11, **caractérisée en ce que,** dans un état monté de la boîte d'installation (1), la première extrémité (8) de la pièce intermédiaire (4) est arrangée à l'intérieur de la couverture (5) et la deuxième extrémité (9) de la pièce intermédiaire (4) est arrangée à l'intérieur du socle (2).

13. Boîte d'installation (1) selon l'une des revendications 11 ou 12, **caractérisée en ce que** la pièce intermédiaire tubulaire (4) présente au moins un gradin dans la direction axiale, qui est arrangé entre la première extrémité (8) et la deuxième extrémité (9).

14. Boîte d'installation (1) selon l'une des revendications 11 à 13, **caractérisée en ce que** la pièce intermédiaire tubulaire (4) présente une section transversale en forme de polygone à la première extrémité (8) et une section transversale sensiblement ronde à la deuxième extrémité (9).

15. Boîte d'installation (1) selon la revendication 13 ou 14, **caractérisée en ce que** la pièce intermédiaire tubulaire (4) augmente en surface de section transversale sur la marche et de la deuxième extrémité (9) à la première extrémité (8).

16. Boîte d'installation (1) selon l'une des revendications 1 à 10, **caractérisée en ce que** la pièce intermédiaire tubulaire (4) et le socle (2) sont reliés d'un seul tenant.
